# EUROPEAN PATENT APPLICATION

(11) **EP 4 458 138 A1**
(43) Date of publication of application: **06.11.2024**
(21) Application number: 24171284.3
(22) Date of filing: 19.04.2024
(51) Int. Cl.: A01G 31/02, A01G 31/00

(54) **IMPROVED HYDROPONIC SYSTEM**

(30) Priority: 01.05.2023 US 202318141760
(71) Applicant: Tierney, Paul, Bury St Edmunds, Suffolk IP30 9TT (GB); Harrison, Todd Adam Dennis, 2216 Rockdale, New South Wales (AU)
(72) Inventor: Tierney, Paul, Bury St Edmunds, Suffolk IP30 9TT (GB); Harrison, Todd Adam Dennis, 2216 Rockdale, New South Wales (AU)
(74) Representative: Sirius IP

(57) **Abstract**

A hydroponic system is provided. One such system comprises a reservoir, flexible fluid table and support system. The reservoir comprising a first plurality of apertures. The flexible fluid table is substantially encapsulated by the reservoir. The support system comprises at least one flexible fluid table support and a coupling system. A first portion of the coupling system surrounds at least a portion of the reservoir and a second portion of the coupling system at least one of directly and indirectly couples the at least one flexible fluid table support to the flexible fluid table.

## Description

### CLAIM OF PRIORITY

This European Patent application comes from a continuation-in-part filed 1st May 2023, US Application No. 18/141,760 which in turn comes from U.S. Application No. 16/763,935, entitled "Improved Hydroponic System", filed May 13, 2020, the contents of which are incorporated herein by reference in their entirety and for all proper purposes. Application No. 16/763,935 is the National Stage entry of International Application No. PCT/EP2018/081977, filed November 20, 2018. International Application No. PCT/EP2018/081977 claims priority to GB app. no. 1719306.1, filed November 21, 2017.

### BACKGROUND

Hydroponics is a type of hydroculture in which plants are grown without soil, instead using mineral nutrient solutions in a water solvent. Using hydroponic systems, terrestrial plants can be grown with only their roots exposed to the mineral nutrient solution.

Historically, hydroponic systems involved many parts, such as pipes, various valves, pumps, manifolds, reservoirs, etc. While effective, such systems suffer from several drawbacks, such as but not limited to complex setup, high number of parts to maintain, increased incidence of a part failure, difficulty in cleaning, and difficulty with expansion. Therefore, there is a need for superior hydroponic systems.

### SUMMARY

In order to overcome the deficiencies in the prior art, a hydroponic system was created. The minimal and simple, yet effective, parts associated with this system, in addition to the unique but common sense approach to integrating the parts, enables not only a quick and easy setup but requires only minimal and easy part maintenance. The uncomplicated maintenance is not only due to the fewer parts to maintain from the prior art but is also due to the less intricate parts included in the system as compared to the prior art.

One such system comprises a reservoir, a flexible fluid table, and a support system. The reservoir may comprise a first plurality of apertures and the flexible fluid table may be substantially encapsulated by the reservoir. The support system may comprise at least one flexible fluid table support and a coupling system. A first portion of the coupling system may surround at least a portion of the reservoir while a second portion of the coupling system may couple the at least one flexible fluid table support to the flexible fluid table.

Another system may comprise a grow assembly. One such grow assembly comprises a reservoir comprising a plurality of surfaces. A first of these plurality of surfaces comprises a first plurality of apertures. The grow assemble may further comprise a flexible fluid table encapsulated by the reservoir, with the flexible fluid table comprising a top surface having a second plurality of apertures that are vertically aligned with the first plurality of apertures of the reservoir. The grow assembly may further comprise a support system comprising at least one flexible fluid table support and a coupling system. The flexible fluid table support comprises an elongated member comprising a third plurality of apertures substantially aligned with the second plurality of apertures of the flexible fluid table while the coupling system couples the reservoir, the flexible fluid table, and the at least one flexible fluid table support.

The system also enables a unique method for growing plants. One such method comprises positioning at least one of a seed and a plant in at least one of a flexible fluid table and a fluid table liner, the flexible fluid table comprising a first plurality of apertures. The method may further comprises supplying a predetermined quantity of fluid to a reservoir, wherein the reservoir substantially encapsulates the flexible fluid table within the reservoir and the reservoir comprises a second plurality of apertures substantially aligned with the first plurality of apertures. The method may further comprise engaging a fluid riser, via a fluid pump, to transfer the fluid from the reservoir to the at least one a flexible fluid table and a fluid table liner.

### BRIEF DESCRIPTION OF THE DRAWINGS

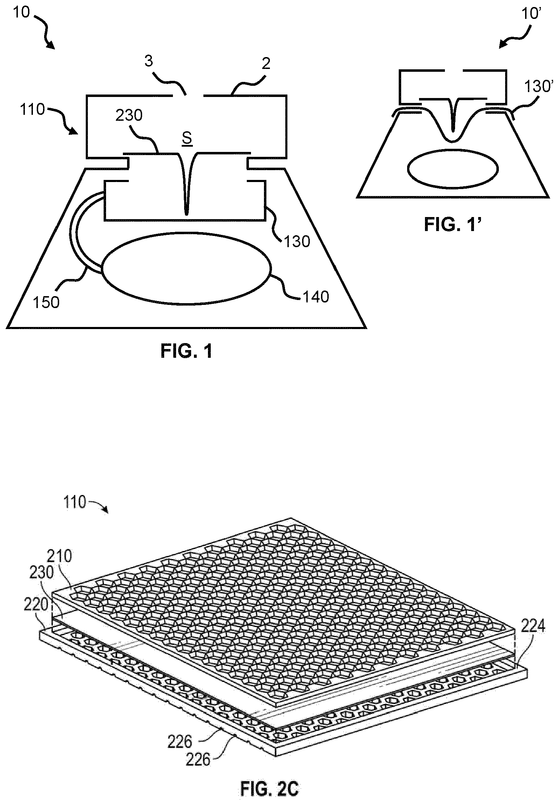

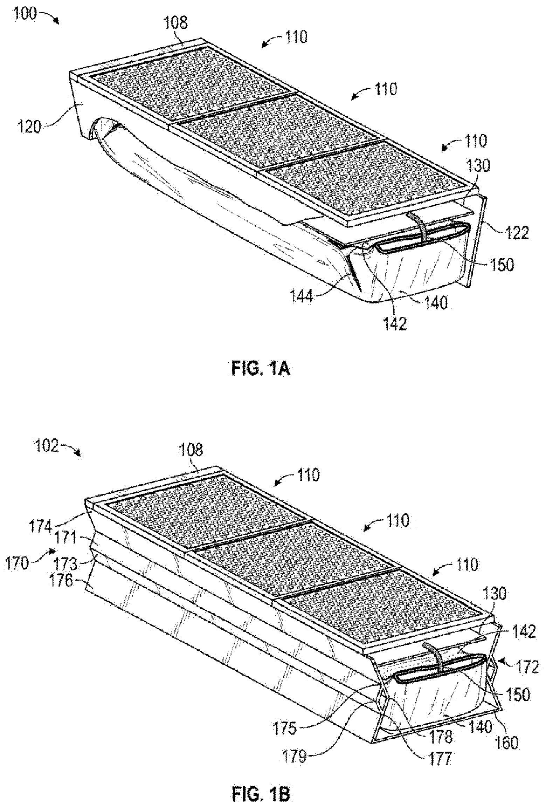

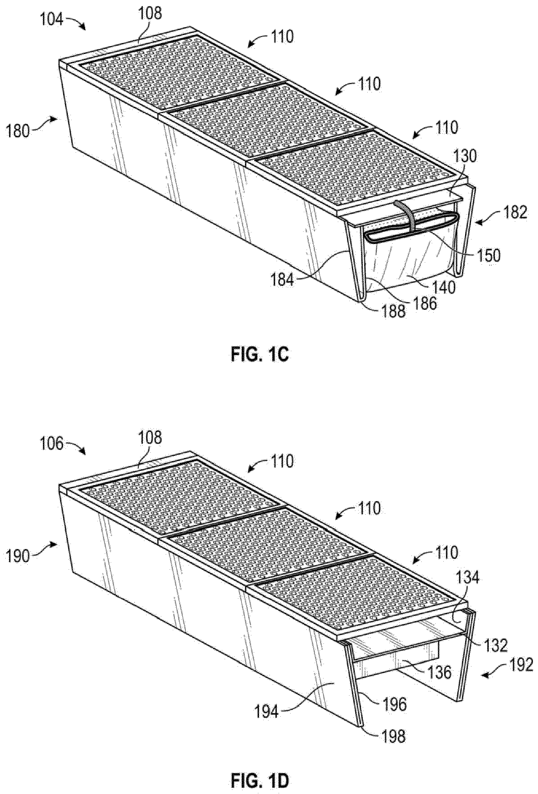

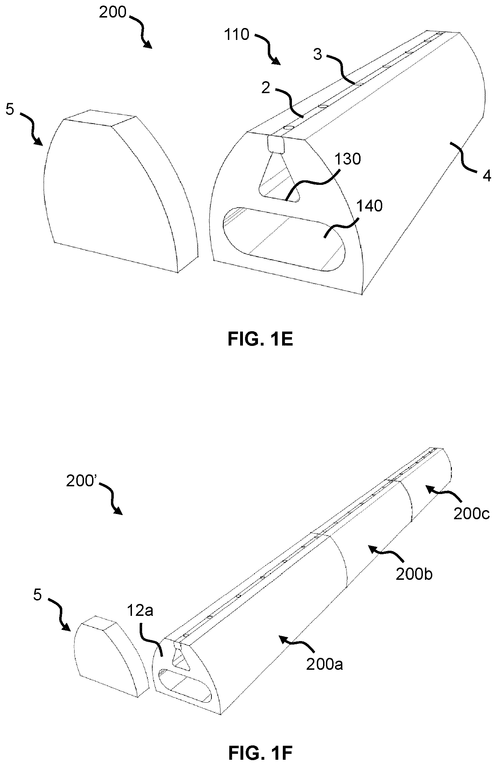

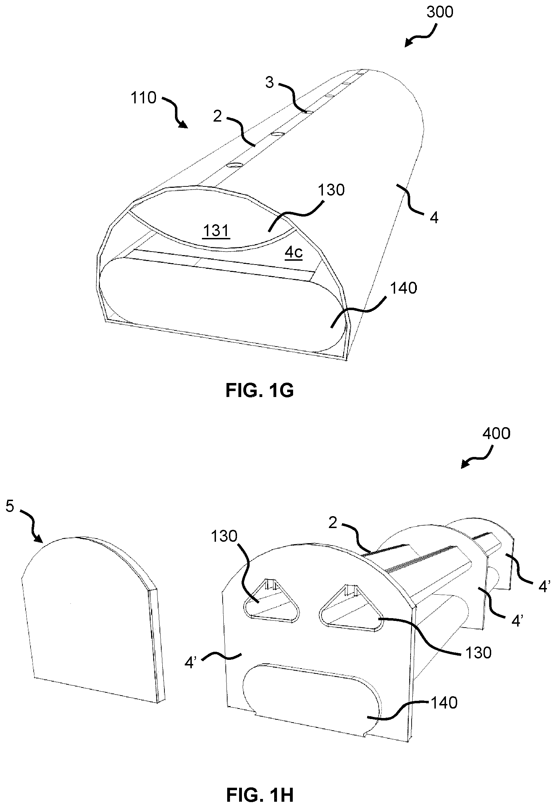

**FIG. 1** illustrates a schematic diagram of a hydroponic system, according an example embodiment.
**FIG. 1'** illustrates another example of a hydroponic system.
**FIGs. 1A** to **1H** respectively illustrate a perspective view of a hydroponic system, according to some example embodiments (with **FIG. 1F** showing an array of hydroponic systems).
**FIG. 2A** illustrates a plan view of a removable upper tray of a grow tray assembly for a hydroponic system, according to some example embodiments.
**FIG. 2B** illustrates a plan view of a lower tray of a grow tray assembly for a hydroponic system, according to example embodiments.
**FIG. 2C** illustrates an exploded perspective view of a grow tray assembly comprising the removable upper tray of **FIG. 2A** and the lower tray of **FIG. 2B****,** according to example embodiments.
**FIG. 3A** illustrates a perspective view of a plurality of grow tray assemblies, as shown in **FIG. 2C****,** disposed in a first orientation within a hydroponic system, according to example embodiments.
**FIG. 3B** illustrates an elevation view of the hydroponic system as shown in **FIG. 3A****.**
**FIG. 3C** illustrates a perspective view of a plurality of grow tray assemblies, as shown in **FIG. 2C****,** disposed in a second orientation within a hydroponic system, according to example embodiments.
**FIG. 3D** illustrates an elevation view of the hydroponic system as shown in **FIG. 3C****.**
**FIG. 4A** illustrates a plan view of the plurality of grow tray assemblies, as shown in **FIG. 2C****,** disposed in the first orientation.
**FIG. 4B** illustrates a plan view of the plurality of grow tray assemblies, as shown in **FIG. 2C****,** disposed in the second orientation.
**FIG. 5A** illustrates a cross-sectional view of a fluid flow within a hydroponic system, according to example embodiments.
**FIG. 5B** illustrates transverse cross-sectional view of the hydroponic system of **FIG. 5A** taken in the plane "6A".
**FIG. 6A** illustrates a cross-sectional view of a fluid reservoir, according to example embodiments.
**FIG. 6B** illustrates a transverse cross-sectional view of the fluid reservoir of **FIG. 6A** taken in the plane "6B".
**FIG. 6C** illustrates a perspective view of a portion of the fluid reservoir of **FIGs. 6A** and **6B****.**
**FIG. 6D** illustrates a perspective view of another removable upper tray of a hydroponic system, according to some example embodiments.
**FIGs. 7** and **7A** respectively illustrate a flowchart of a method for utilising a hydroponic system as described herein, according to some example embodiments.
**FIG 8** illustrates a perspective view of hydroponic system according to an example of the embodiment.
**FIG. 9** illustrates a cross-sectional view of a hydroponic system along section A in FIG. 8.
**FIG. 10** illustrates a perspective view of a fluid table support according to one embodiment of the invention.
**FIG. 11** illustrates a cross-section view of a hydroponic system having a rectangular cross-section according to an embodiment.

### DETAILED DESCRIPTION

Currently available hydroponic systems involve many parts, such as pipes, various valves, pumps, manifolds, reservoirs, etc. While effective, such systems suffer from several drawbacks, such as but not limited to complex setup, high number of parts to maintain, increased incidence of a part failure as well as difficulty with cleaning and expansion. Accordingly, the present disclosure describes embodiments of new hydroponic systems that are more compact, have fewer parts, are easier to clean, utilise less energy, are easier to setup and breakdown, and that store with substantially no unused space compared to currently available hydroponic systems. **FIGs. 1**, 1A-1H, as described below, illustrate various embodiments of some example hydroponic systems 10, 100, 102, 104, 106, 200, 300, 400.

**FIG. 1** illustrates a schematic diagram of a hydroponic system 10, according to some example embodiments. The hydroponic system 10 comprises a grow assembly 110. The grow assembly 110 comprises: a body 2 comprising an aperture 3, and a porous layer 230. The system 10 further comprises a fluid table 130, a fluid reservoir 140 and a fluid riser 150 in fluid communication with the fluid reservoir and the fluid table.

In some embodiments, the body 2 of the hydroponic system 10 may comprise a support to support the grow assembly 110. The support may be a plurality of support legs.

In the example embodiment of **FIG. 1****,** the fluid table 130 is separate to the body 2 and disposed underneath the body 2. Furthermore, the fluid reservoir 140 is disposed underneath the fluid table 130. In other embodiments, the fluid table 130 and/or the fluid reservoir 140 may be integral and formed as part of one component, such as the housing 4 in the embodiment of **FIG. 1E****.**

In the example embodiment of **FIG. 1****,** the body 2 is self-supporting. The location for a seed S or a plurality of seeds S is shown. For example, a single seed S may be associated with a single aperture. In other embodiments, at least one aperture is provided, for example a plurality of apertures, and one seed may be located in the region of each aperture.

In some example embodiments, the fluid table 130 is made from a flexible material, such as plastic. The fluid table 130 may therefore be provided as a sheet, for example a sheet of plastic. Additionally, a liner (not shown) may cover the fluid table 130. The liner can be removable so that it can be replaced with a fresh liner. One liner can be provided for each growing cycle, for example. In some example embodiments, when the fluid table 130 is provided as a flexible material, the fluid table 130 may extend towards the fluid reservoir 140. That is, the fluid table 130 may be downwardly-protruding. An example of such an embodiment is shown in **FIG. 1'****.** Here, a further hydroponic system 10' comprising a fluid table 130' made from a flexible material is shown. The hydroponic system 10' is otherwise the same as the hydroponic system 10 shown in **FIG.1****.**

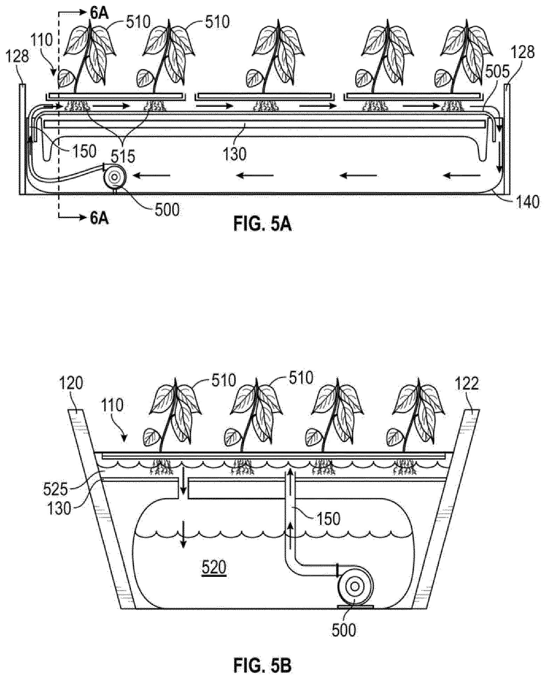

**FIG. 1A** illustrates a perspective view of a hydroponic system 100, according to some example embodiments. The hydroponic system 100 comprises at least one grow assembly, herein referred to as a grow tray assembly 110 because the body is in the form of a tray assembly and includes a plurality of trays. That is, the combination of the body and the porous layer form the grow tray assembly when the body is in the form of the tray assembly. The system further comprises a plurality of support legs 120, 122 defining a support, a fluid table 130, a fluid reservoir 140, a fluid pump 500 (as seen in **FIGs. 5A** and **5B****),** and a fluid riser 150.

Each of the plurality of support legs 120, 122 can be disposed at an angle with respect to the horizontal and the vertical, for example forming an angle with the horizontal that is greater than 0° and less than 90°, more specifically an angle greater than 45° and less than 90° in some embodiments. Accordingly, a separation between upper edges of support legs 120 and 122 can be greater than a separation between lower edges of support legs 120 and 122. Although not shown in **FIG. 1A****,** lower edges of the plurality of support legs 120, 122 can be coupled to a base 160 (as seen in **FIG. 1B****)** via a hinge, for example a living hinge, although any other type of hinge is also contemplated. In some alternative embodiments, lower edges of the plurality of support legs 120, 122 may not be coupled to base 160 but can be in contact with base 160 such that the lower edges are immobilised in the orientation shown in **FIG. 1A****.**

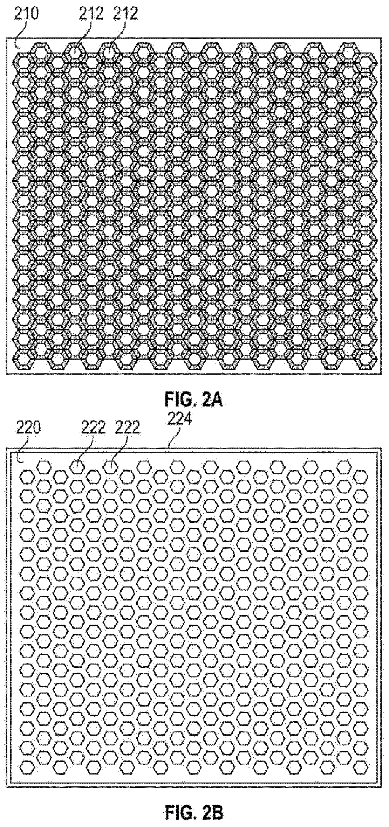

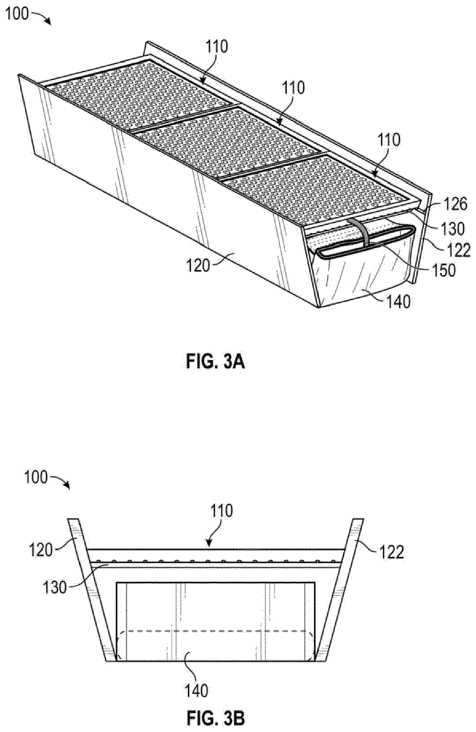

The plurality of support legs 120, 122 can be in contact with the at least one grow tray assembly 110, specifically a lower tray of each grow tray assembly 110, as will be described in more detail in connection with **FIGs. 2B** and **2C****.** In this way the plurality of support legs 120, 122 can be configured to support the at least one grow tray assembly 110 in each of two substantially perpendicular orientations having correspondingly different elevations above fluid table 130, as will be described in more detail in connection with **FIGs. 3A-4B****.** In some embodiments, the plurality of support legs 120, 122 can be configured to fold substantially flat beneath the at least one grow tray assembly 110 when not in use, for example, during shipping and/or storage.

In some embodiments, hydroponic system 100 can comprise a guide 108 disposed between support leg 120 and support leg 122 and configured to define an edge against which to place the at least one grow tray assembly 110 in at least one of the two substantially perpendicular orientations.

Fluid table 130 is disposed underneath grow tray assembly 110, specifically underneath a lower tray (as seen in **FIGs. 2B** and **2C****)** of each grow tray assembly 110. Fluid table 130 can be held in place in any number of ways, e.g., friction between edges of fluid table 130 and inside surfaces of the plurality of support legs 120, 122, edges of fluid table 130 fitting into respective grooves (as seen in for example **FIG. 3A****)** disposed in the inside surfaces of the plurality of support legs 120, 122, or edges of fluid table 130 being supported by respective ridges extending away from the inside surfaces of the plurality of support legs 120, 122 (as seen in for example **FIG. 3A****).** A separation between the at least one grow tray assembly 110 and the underlying fluid table 130 in at least one of the two orientations can depend on the type of plant being grown and can be sufficient to position at least part of the root systems of the plants in a nutrient fluid flowing on a surface of fluid table 130. As will be described in more detail in connection with **FIG. 5A****,** fluid table 130 can be disposed at a slight angle with respect to the horizontal such that gravity induces a fluid introduced over a top surface of fluid table 130 to flow along a length of fluid table 130 underneath the at least one grow tray assembly 110. Accordingly, a first side of fluid table 130 can be inclined relative to a second side of fluid table 130 opposite the first side. Such a slight angle can be within a range such that a ratio between a rise of fluid table 130 and a length along which nutrient fluid flows along fluid table 130 is between 1:1000 and 50: 1000, inclusive, although any other angle for fluid table 130 is contemplated.

One or more of the plurality of support legs 120, 122, base 160, fluid table 130 and guide 108 can comprise a lightweight, strong, and/or inexpensive material such as plastic, aluminum, etc. In embodiment, plastics such as polypropylene can be used. Moreover, in some such embodiments, one or more hinges coupling any of the plurality of support legs 120, 122, base 160, guide 108, and/or fluid table 130 can comprise living hinges such that one or more of the plurality of support legs 120, 122, base 160, guide 108, and/or fluid table 130 can be formed of a single piece, further reducing part count and further simplifying setup and maintenance of hydroponic system 100 or any other system described herein, e.g., 102, 104, 106 (as seen in **FIGs. 1B-1D****).**

Fluid reservoir 140 is disposed underneath the fluid table 130 and between the plurality of support legs 120, 122. The fluid reservoir 140 comprises a flexible, non-rigid bladder formed of a material such as rubber, plastic, or any other material having sufficient flexibility and pliability to at least partially take the shape of its surroundings, e.g., at least a portion of support legs 120, 122, when at least partially filled with fluid and at least partially collapse under its own weight when unfilled. In some embodiments, fluid reservoir 140 can comprise a flexible plastic or rubber cylinder, e.g., a rolled cylinder of plastic or rubber. In some embodiments, fluid reservoir 140 can be black in colour and/or opaque to visible light and/or other wavelengths of electromagnetic radiation that stimulate algae and/or other plant growth.

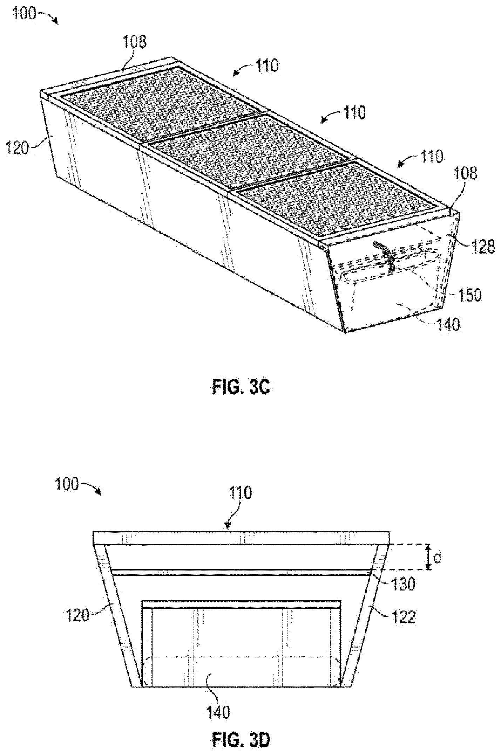

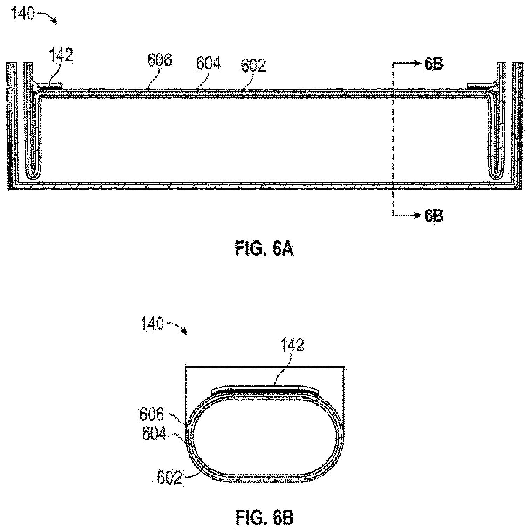

In some embodiments, fluid reservoir 140 can be open at each end. In such embodiments, each end of fluid reservoir 140 can be turned up at an angle sufficient to prevent fluid within fluid reservoir 140 from spilling out either end. For example, each end of fluid reservoir 140 can be turned up such that an opening at each end of fluid reservoir 140 forms a plane having a normal vector approximately 90° from the horizontal, although any other angle sufficient to prevent fluid within fluid reservoir 140 from spilling out either end is also contemplated. In some embodiments, each end of fluid reservoir 140 can be fixed in this up-turned orientation utilising one or more fasteners 142, for example hook-and-loop fasteners such as Velcro^{®}, although any other type of fastener is also contemplated. Such an up-turned orientation can cause a crease 144 to form near each end of fluid reservoir 140, which can further reduce evaporation of fluid from within fluid reservoir 140 by physically cutting off a surface of the fluid within fluid reservoir 140 from exposure to the outside environment. In some embodiments, hydroponic system 110 can, in addition or alternative to such fasteners, comprise inserts 128 (as seen in **FIGs. 3C** and **6A****)** configured to contact, and thereby hold, each end of fluid reservoir 140 in the illustrated up-turned orientation. In some embodiments, inserts 128 can be held in place utilising one or more fasteners. In some embodiments, inserts 128 can be disposed at an angle with respect to the horizontal and the vertical, for example forming an angle with the horizontal that is greater than 0° and less than 90°, more specifically an angle greater than 45° and less than 90° in some embodiments.

In some other embodiments, instead of having open, upturned ends, fluid reservoir 140 may be substantially sealed at each end and, instead, may comprise a first orifice disposed a predetermined distance from a first end and on an upper surface of fluid reservoir 140 when at least partially filled, and a second orifice disposed a predetermined distance from a second end of the fluid reservoir 140 on the supper surface of fluid reservoir 140. In some embodiments the second end can be opposite the first end. The first orifice and the second orifice may have any suitable shape, e.g., circular, ovoid, polygonal or irregular shaped. The first orifice may be configured to allow fluid riser 150 to extend out from within fluid reservoir 140 for pumping nutrient fluid onto a surface of fluid table 130. The second orifice may be configured to allow the nutrient fluid to flow back into fluid reservoir 140 from an opposite side of fluid table 130.

In yet other embodiments, fluid reservoir 140 may have a first end that is substantially sealed and a second end, opposite the first end, that is open and upturned as previously described. In some of such embodiments, the second, open and upturned end may be disposed substantially underneath a lowest, drain side of fluid table. The second, open and upturned end may provide for both nutrient fluid delivery to fluid table 130 and drainage from fluid table 130. For example, fluid riser 150 may extend out of the second, open and upturned end of fluid reservoir 140 and may extend along fluid table 130, either over or under fluid table 130, such that nutrient fluid is released onto fluid table 130 at an end opposite the second, open and upturned end of fluid reservoir 140, which may also be opposite a lower, drainage end of fluid table 130. Accordingly, nutrient fluid may be pumped from the second, open and upturned end of fluid reservoir 140 to an opposite, highest end of fluid table 130 via fluid riser 150, the nutrient fluid 130 may flow across fluid table 130 and empty back into second, open and upturned end of fluid reservoir 140.

Fluid reservoir 140 can be positioned underneath fluid table 130 such that a level of fluid within fluid reservoir 140, when properly filled, is a predetermined vertical distance below a top surface of fluid table 130, e.g., 10-20 centimetres (cm). However, such a range is an example only and any other vertical distance or range of vertical distances suitable for a particular growing application is also contemplated. Fluid reservoir 140 is described in more detail in connection with **FIGs. 6A-6C** below.

Hydroponic system 100 can further comprise a fluid pump 500 (as seen in **FIGs. 5A** and 5B) in fluid communication with fluid reservoir 140. In some embodiments, fluid pump 500 can be submersible, disposed within fluid reservoir 140, and in fluid communication with a fluid disposed within fluid reservoir 140. Fluid pump 500 can be configured to pump a nutrient fluid, e.g., mineralised water, from fluid reservoir 140, through a fluid riser 150, onto fluid table 130. Fluid riser 150 can comprise a rigid or flexible tube in fluid communication with fluid pump 500 at a first end and fluid table 130 at a second end.

In operation, the fluid pump 500 pumps nutrient fluid through one side of fluid reservoir 140, via fluid riser 150, onto the first side of fluid table 130. Once on fluid table 130, gravity causes the fluid to spread out across fluid table 130, forming a flowing nutrient fluid layer 525 (as seen in **FIG. 5B****)** underneath the at least one grow tray assembly 110. The fluid then flows over the second side of the fluid table 130, and down into the opposite side of fluid reservoir 140, recycling the nutrient fluid.

Such a compact, simple design dispenses with extraneous plumbing and piping, making hydroponic system 100 simpler, less expensive, and significantly easier to clean than alternative systems available. Moreover, the compact positional arrangement of at least fluid reservoir 140, the fluid pump 500, and fluid table 130 allows a much smaller fluid pump to be used since fluid need only be pumped a vertical distance from the reservoir fluid surface of, e.g., 10-20cm, compared with vertical distances which can exceed 1 metre (m) in alternative systems available. This lower vertical pumping requirement not only allows hydroponic system 100 to use a less expensive, less powerful, and easier to maintain pump, but also avoids a potential problem experienced with alternative systems requiring such larger pumps; that such larger pumps give off significantly more waste heat and thereby increase the temperature and, via thermal expansion, the physical level of the fluid beyond growing tolerances.

Although not shown in **FIG. 1A****,** hydroponic system 100 can further comprise a fluid heater configured to maintain the nutrient fluid within fluid reservoir 140 at a desired temperature.

**FIG. 1B** illustrates a perspective view of another hydroponic system 102, according to some example embodiments. Hydroponic system 102 is substantially identical to hydroponic system 100 previously described in connection with **FIG. 1A****,** except as described below.

Hydroponic system 102 comprises a plurality of support legs 170, 172. Each support leg 170, 172 comprises a first portion 174, a second portion 176, and a hinge 178 coupling first portion 174 to second portion 176. In some embodiments, hinge 178 is a living hinge, although any other type of hinge is also contemplated.

In some embodiments, each support leg 170, 172 further comprises a third portion 171 coupled to first portion 174 via a hinge 175, a fourth portion 173 coupled to second portion 176 via a hinge 177, and a hinge 179 coupling third portion 171 to fourth portion 173. In some embodiments, hinges 175, 177, 179 can be living hinges, although any other type of hinges are also contemplated. As shown, first portion, 174, second portion 176, third portion 171, and fourth portion 173, along with the above-described hinges form a diamond-shaped hinge assembly.

First portion 174 and second portion 176 of each of support legs 170, 172 can be disposed at an angle with respect to the horizontal and the vertical, for example forming an angle with the horizontal that is greater than 0° and less than 90°, more specifically an angle greater than 45° and less than 90° in some embodiments. Accordingly, a separation between upper edges of first portions 174 of each of support legs 170, 172 can be greater than a separation between hinges 178 of each of support legs 170, 172. Similarly, a separation between lower edges of second portions 176 of each of support legs 170, 172 can be greater than a separation between hinges 178 of each of support legs 170, 172. As shown in **FIG. 1B****,** in some embodiments, lower edges of second portions 176 of at least one of support legs 170, 172 can be coupled to base 160 via a hinge, for example a living hinge, although any other type of hinge is also contemplated. In some alternative embodiments, lower edges of second portions 176 of support legs 170, 172 may not be coupled to base 160 but can be in contact with base 160 such that the lower edges are immobilized in the orientation shown in **FIG. 1B****.**

In some embodiments, for each of support legs 170, 172, a threaded shaft (not shown in **FIG. 1B****)** can articulate with a complementarily threaded feature (not shown in **FIG. 1B****)** disposed in one of third portion 171, fourth portion 173, or hinge 179 and a complementary threaded feature (not shown in **FIG. 1B****)** disposed in one of first portion 174, second portion 176, or hinge 178 such that when the threaded shaft is rotated, hinges 178 and 179 are drawn closer to or farther away from one another, thereby adjusting the height of support legs 170, 172.

First portions 174 of support legs 170, 172 can be in contact with the at least one grow tray assembly 110, specifically a lower tray of each grow tray assembly 110, as will be described in more detail in connection with **FIGs. 2B** and **2C****.** In this way support legs 170, 172 can be configured to support the at least one grow tray assembly 110 in at least one of two substantially perpendicular orientations having correspondingly different elevations above fluid table 130, as will be described in more detail in connection with **FIGs. 3A-4B****.**

When at least partially filled with fluid, fluid reservoir 140 can be configured to press against an inside surface of each of support legs 170, 172 thereby preventing support legs 170, 172 from folding inward. Additionally, fluid table 130 can be held in place as described above in connection with **FIG. 1A****,** however, being in contact with first portions 174 of support legs 170, 172, rather than support legs 120, 122.

When being stored or during shipping, support legs 170, 172 can be configured to fold substantially flat beneath the at least one grow tray assembly 110. For example, hinge 178 of each of support legs 170, 172 travels inward and down toward base 160 until first portion 174 is flat against second portion 176 for each of support legs 170, 172.

For embodiments further comprising third portion 171 and fourth portion 173, hinge 178 of each of support legs 170, 172 travels inward and down toward base 160, while hinge 179 of each of support legs 170, 172 travel outward and down toward base 160 until first portion 174 is nearly flat against third portion 171, third portion 171 is nearly fat against fourth portion 173, and fourth portion 173 is nearly flat against second portion 176 for each of support legs 170, 172.

**FIG. 1C** illustrates a perspective view of yet another hydroponic system 104, according to some example embodiments. Hydroponic system 104 can be substantially identical to hydroponic system 100 previously described in connection with **FIG. 1A****,** except as described below.

Hydroponic system 104 comprises a plurality of support legs 180, 182. Each support leg 180, 182 comprises a first portion 184, a second portion 186, and a hinge 188 coupling first portion 184 to second portion 186. In some embodiments, hinge 188 can be a living hinge, although any other type of hinge is contemplated.

For each support leg 180, 182, first portion 184 can be in contact with and support at least one grow tray assembly 110 when the at least one grow tray assembly 110 is positioned in at least one of two orientations, as will be described in more detail in connection with **FIGs. 3A-4B****.** A lower edge of first portion 184 can be in contact with the ground or a flat surface on which hydroponic system 104 is disposed. An upper edge of second portion 186 can be in contact with and support fluid table 130 and a lower edge of second portion 186 can be in contact with the ground or flat surface on which hydroponic system 104 is disposed.

In some embodiments, first portion 184 of each of support legs 180, 182 can be disposed at an angle with respect to the horizontal and the vertical, for example forming an angle with the horizontal that is greater than 0° and less than 90°, more specifically an angle greater than 45° and less than 90° in some embodiments. Accordingly, a separation between upper edges of first portions 184 of each of support legs 180, 182 can be greater than a separation between lower edges of first portions 184 of each of support legs 180, 182. In some embodiments, second portion 186 of each of support legs 180, 182 can be disposed substantially vertically, or at a slight angle in either direction from the vertical. Second portion 186 of each of support legs 180, 182 can be configured to support fluid table 130.

When at least partially filled with fluid, fluid reservoir 140 can be configured to press against an inside surface of second portion 186 of each of support legs 180, 182 thereby preventing at least second portions 186 of each of support legs 180, 182 from folding inward. When not in use or during shipping, support legs 180, 182 can be configured to fold substantially flat beneath the at least one grow tray assembly 110.

**FIG. 1D** illustrates a perspective view of yet another hydroponic system 106, according to some example embodiments. Hydroponic system 106 can be substantially identical to hydroponic system 100 previously described in connection with **FIG. 1A****,** except as described below.

Hydroponic system 106 comprises a plurality of support legs 190, 192. In some embodiments, each support leg 190, 192 can be substantially the same as respective support legs 120, 122 of **FIG. 1A****.** In some other embodiments, as shown in **FIG. 1D****,** each support leg 190, 192 comprises a first portion 194 and a second portion 196. In some embodiments, first portion 194 and second portion 196 are integrated without any hinge. In some other embodiments, a hinge 198 couples first portion 194 to second portion 196. In some embodiments, hinge 198 can be a living hinge, although any other type of hinge is contemplated. In either case, support legs 190, 192 can be disposed at angles with the horizontal and/or vertical as previously described for support legs 120, 122 in connection with **FIG. 1A****.** Each support leg 190, 192 can be in contact with and support at least one grow tray assembly 110 when the at least one grow tray assembly 110 is positioned in at least one of two orientations, as will be described in connection with **FIGs. 3A-4B****.**

In some embodiments, hydroponic system 106 can comprise fluid table 130 as previously described in connection with **FIGs. 1A-1C****.** In some other embodiments, as shown in **FIG. 1D****,** hydroponic system 106 comprises a fluid table 132 comprising sidewalls 134 configured to be respectively bonded to, or friction fit against, an inside surface of support legs 190, 192. In some embodiments, fluid table 132 is a separate structure from support legs 190, 192. In some other embodiments, fluid table 132 and support legs 190, 192 can be formed of a single piece of material, comprising living hinges at each fold.

Hydroponic system 106 further comprises at least one support element 136 disposed substantially perpendicular to, and in contact at its respective ends with, respective ones of support legs 190, 192. In some embodiments, the at least one support element 136 can be disposed at another angle than perpendicular to support legs 190, 192. Support element 136 is configured to support fluid table 132 and can also prevent support legs 190, 192 from collapsing inward during operation. Fluid reservoir 140 and fluid riser 150 are not shown in **FIG. 1D** for easy viewing of support element 136.

**FIG.1E** illustrates a perspective view of yet another hydroponic system 200, according to some example embodiments. The hydroponic system 200 comprises at least one grow assembly 110, a housing 4 defining a support to support the grow assembly 110, a fluid table 130 and a fluid reservoir 140. A fluid pump 500 (as seen in **FIGs. 5A** and **5B****),** and a fluid riser 150 are not shown but can be part of the hydroponic system 200. The grow assembly 110 comprises a body 2 comprising a plurality of apertures 3 and a porous layer (not shown). The hydroponic system 200 shown in **FIG.1E** is suitable for growing a vegetable. Furthermore, in some embodiments, the support may be a plurality of support legs, which may be part of the housing 4 or coupled to the housing 4.

In this example embodiment, the porous layer is arranged to wick fluid from the fluid table 130 towards a seed (not shown) that is provided on the porous layer. The wicking action can take place even if a thin film of fluid (such as water or nutrient water), which may be moving, is present on the fluid table 130. The porous layer is to support the seed and allow for fluid, such as nutrient water, to surround the seed. The porous layer may comprise an accommodation portion, such as a fold, that accommodates a seed and allows the seed to rest in position in a predetermined location on the porous layer. Fluid is then wicked from fluid, in the fluid table, to the seed by the porous layer to allow roots of the seed to grow towards the fluid table 130. The porous layer may be arranged to pass through an opening of the body 2 to protrude downwards from the body 2 and toward the fluid table 130. This allows the roots of the seed to grow into a space provided by a downwardly protruding portion of the porous layer. The downwardly protruding portion is a portion of the porous layer which extends away from the body 2 but rests on the body 2. The body 2 may comprise a fixing to hold a position of the porous layer to ensure a predetermined amount of the porous layer extends away from the body 2. In this example embodiment, the porous layer is formed by a wicking material such as burlap. Burlap is a woven fabric and is sometimes referred to as hessian. The porous layer is arranged to remain in place throughout a growing cycle of the seed.

In this example embodiment, the fluid table 130 and the fluid reservoir 140 are formed within the housing 4. In other example embodiments, the fluid table 130 is made of a flexible material, such as a sheet of plastic. In other embodiments, the housing 4 forms a first cavity within which to arrange a flexible fluid reservoir (not shown) and a second cavity in which to arrange the fluid table 130. That is, the fluid reservoir may be a bladder deformed by the fluid it contains. In embodiments where the fluid table 130 and the fluid reservoir 140 are formed in the housing 4, as shown in **FIG. 1E****,** a flexible liner may be added to one or both of the fluid table 130 and the fluid reservoir 140. The flexible liner is removable so that one liner can be used for each growing cycle.

In this example embodiment, the body 2 is provided with a plurality of linearly aligned apertures 3. In other embodiments, an array of apertures 3 may be provided. The array of apertures 3 may comprise a plurality of rows and columns. In alternative embodiments a single aperture 3 may be provided. The body 2 is elongate and is insertable into the housing 4. The housing 4 is therefore arranged to accommodate the body 2 in an accommodation portion. The body 2 is therefore an insert that is detachable from the housing 4.

An end cover 5 is shown as part of the hydroponic system 200 of the example embodiment of **FIG. 1E****.** The end cover 5 is optional in embodiments where the housing 4 forms a first cavity within which to arrange a flexible fluid reservoir (not shown) and a second cavity in which to arrange the fluid table 130.

**FIG.1F** illustrates a perspective view of an array 200' of hydroponic systems 200a-c, according to some example embodiments. The array 200' shown in **FIG.1F** comprises multiple hydroponic systems 200 of **FIG. 1E****,** wherein first to third hydroponic systems 200a-200c are provided. The first hydroponic system 200a comprises a first end for coupling to an end cover 5 and a second end for coupling to a second hydroponic system 200b. The second hydroponic system 200b further couples to a third hydroponic system 200b. In some embodiments, a coupling system may be used to attach adjacent hydroponic systems together. Respective mating parts of the coupling system may be comprised by each hydroponic system. In some embodiments, respective mating parts of the coupling system may be themselves coupleable to each hydroponic system.

In other embodiments, wherein the housing 4 forms a first cavity within which to arrange a flexible fluid reservoir (not shown) and a second cavity in which to arrange the fluid table 130, each of a plurality of hydroponic systems in an array of hydroponic systems may share components, such as a fluid reservoir, that is passed into respective cavities of the hydroponic systems of the array. Further, in these embodiments, the plurality of hydroponic systems may abut or be provided in proximity to an adjacent hydroponic system of the array. It is also not essential that each of the hydroponic systems are aligned in a linear fashion as shown in **FIG. 1F** because the flexible fluid reservoir can adapt to the relative position of each of the hydroponic systems of the array.

**FIG.1G** illustrates a perspective view of yet another hydroponic system 300, according to some example embodiments. The hydroponic system 300 comprises a housing 4 which defines a fluid table 130 formed within the housing 4, a fluid reservoir 140 which is insertable into the housing 4, and a body 2 with a plurality of apertures 3. The body 2 is part of a grow assembly 110 which also comprises a porous layer (not shown) to wick fluid from the fluid table 130. In the embodiment shown, the body 2 is removable from the housing 4. However, in some embodiments, the body 2 may be permanently fixed to the housing 4. In other embodiments, the body 2 may be part of the housing 4 and the apertures 3 may be formed from the housing 4.

The fluid table 130 of the embodiment of **FIG.1G** is different to the fluid table 130 of the embodiment to **FIG. 1E** in that the fluid table 130 of the hydroponic system 300 of **FIG. 1G** comprises an arcuate surface 131 that connects to side walls of the housing 4. In the hydroponic system 200 of **FIG. 1E****,** the fluid table 130 comprises a flat surface with ends that extend towards and abut the body 2. Further, the fluid table 130 of the hydroponic system 200 of **FIG. 1E** comprises a substantially triangular cross-section, whereas the fluid table 130 of the hydroponic system 300 of **FIG. 1G** comprises a substantially elliptical cross-section.

The housing 4 of the hydroponic system 300 of **FIG. 1G** is defined by a substantially constant wall thickness. In some embodiments, the housing 4 may be formed from sheet material. A cavity 4c is shown in the hydroponic system 300 of **FIG. 1G****,** within which the fluid reservoir 140 is disposed. The fluid reservoir 140 of the hydroponic system 300 is not arranged to entirely fill the cavity 4c so that a portion of the cavity 4c remains when the fluid reservoir 140 is inserted, as shown in **FIG. 1G****.**

**FIG.1H** illustrates a perspective view of yet another hydroponic system 400, according to some example embodiments. The hydroponic system 400 of **FIG.1H** is different to the respective hydroponic systems 200, 300 of **FIG. 1E** and **FIG. 1G** in that a frame is provided. The frame comprises three individually arrangeable supports 4' that are each configured to hold two fluid tables 130 and a fluid reservoir 140. The supports 4' define stands to support a grow assembly (only a body 2 is shown). The supports 4' are moveable relative to one another. Each of the supports 4'comprises at least one first opening for receiving a fluid table 130 and a second opening for receiving a fluid reservoir 140. Two first openings are provided where there are two fluid tables 130. Each fluid table 130 has an associated body 2 with linearly arranged apertures (not shown). Therefore, two bodies 2 are shown. An end cover 5 is also shown to cover an end of each fluid table 130 and the fluid reservoir 140.

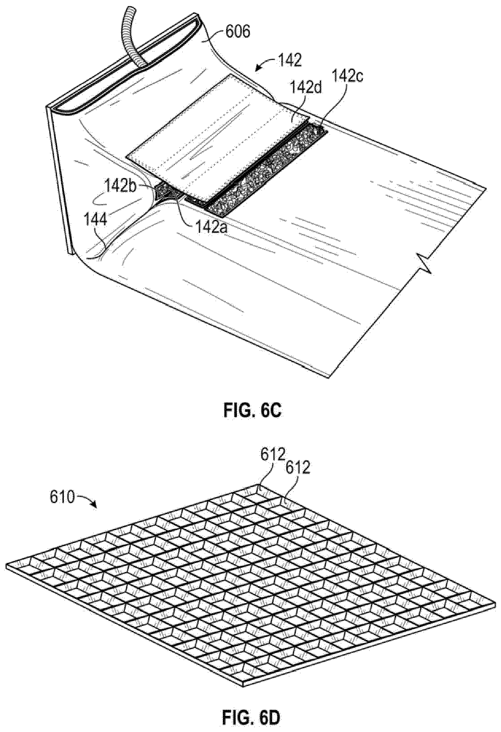

**FIGs. 2A-2C** and **6D** describe grow tray assembly 110, as previously described in connection with **FIGs. 1A-1D****,** in more detail.

**FIG. 2A** illustrates a plan view of a removable upper tray 210 of grow tray assembly 110 for a hydroponic system, according to some example embodiments, wherein the removable upper tray 210 and a lower tray form a tray assembly. Removable upper tray 210 comprises a plurality of apertures 212. Apertures 212 can be polygonal, having any number of sides. In **FIG. 2A** apertures 212 are shown as having a hexagonal shape. In some other embodiments, apertures 212 can be circular, ovoid, irregularly shaped, or a combination of any of the above shapes and can, in some embodiments have different sizes. In some embodiments the plurality of apertures 212 can extend along an entire surface of removable upper tray 210, while in some other embodiments, the plurality of apertures 212 can extend along only a portion of the surface of removable upper tray 210. In some embodiments, each of the plurality of apertures 212 comprises sloping, tessellated edges such that there are substantially no gaps between adjacent sloping aperture edges.

**FIG. 6B** illustrates another example of a removable upper tray 610, however, comprising a plurality of substantially rectangular-shaped apertures 612 comprising sloping, tessellated edges such that there are substantially no gaps between adjacent sloping edges. In some embodiments, a complementary lower tray can have a plurality of substantially similarly, or differently, shaped apertures.

**FIG. 2B** illustrates a plan view of a lower tray 220 of grow tray assembly 110 for a hydroponic system according to example embodiments. Lower tray 220 comprises a plurality of apertures 222. Lower tray 220 can further comprise a ridge 224 extending at least partially around a perimeter of lower tray 220, providing a guide for disposing removable upper tray 210 over lower tray 220. In some embodiments, apertures 222 can be substantially aligned with respective apertures 212 of removable upper tray 210 when removable upper tray 210 is properly positioned over lower tray 220. In some embodiments, the plurality of apertures 222 of lower tray 220 can have substantially the same size as the plurality of apertures 212 of removable upper tray 210. In some other embodiments, the plurality of apertures 222 of lower tray 220 can be smaller than the plurality of apertures 212 of removable upper tray 210, which can provide more support for the plants and their root systems than embodiments where the plurality of apertures 222 of lower tray 220 are substantially equal in size to the plurality of apertures 212 of removable upper tray 210.

In some embodiments, each of removable upper tray 210, 610 and lower tray 220 can comprise injected molded poly-vinyl chloride (PVC) foam or any other suitable material formed in any other suitable manner. In some embodiments, removable upper tray 210, 610 can have a substantially white colour in order to reflect a substantial amount of sunlight, thereby reducing the thermal load on and/or exposure of algae-growing light to, the roots of plants. Any other colour is also contemplated, however. Similarly, in some embodiments, lower tray 220 can have a substantially black colour in order to substantially absorb remaining light not blocked or reflected by removable upper tray 210, 610. Any other colour is also contemplated, however.

**FIG. 2C** illustrates an exploded perspective view of grow tray assembly 110 comprising removable upper tray 202 of **FIG. 2A** and lower tray 204 of **FIG. 2B** according to example embodiments. The lower tray 220 and the upper tray 202 form a tray assembly. Lower tray 220 is configured to receive a porous layer 230 guided by ridge 224 and removable upper tray 210 over porous layer 230 such that porous layer 230 is disposed between removable upper tray 210 and lower tray 220. Accordingly, a top side of lower tray 220, at least within the perimeter defined by ridge 224, can be substantially smooth. An underside of lower tray 220 can comprise a plurality of grooves 226 running substantially the entire length of lower tray 220 and can be configured to channel nutrient fluid from fluid table 130, 132. Accordingly, nutrient fluid can reach porous layer 230 through condensation and/or direct physical contact with the nutrient fluid flowing across fluid table 130, or utilising "plugs" of a similar porous medium (not shown) disposed within the plurality of apertures 222 and configured to wick the nutrient fluid.

Porous layer 230 can comprise a paper-based product, such as paper towel, felt, rock wool, or any other suitable material configured to support seeds dispensed into the plurality of apertures 212 of removable upper tray 210 and to wick and retain nutrient fluid from fluid table 130, 132 when grow tray assembly 110 is properly positioned within operating hydroponic system 10, 100, 102, 104, 106. In some embodiments, porous layer 230 can also be strong enough to maintain sufficient tension between its fibers that it can be removed as a single piece at the end of a growing cycle.

As will be described in more detail in connection with **FIGs. 3A-4B****,** grow tray assembly 110, and thus at least lower tray 220, can have a first length L1 in a first dimension and a second length L2, shorter than the first length L1, in a second dimension perpendicular to the first dimension. These unequal first L1 and second L2 lengths allow grow tray assembly 110 to be positioned in hydroponic system 10, 100, 102, 104, 106 in each of a first orientation and a second orientation substantially perpendicular to the first orientation.

In the first orientation, grow tray assembly 110 is supported by the inside surfaces of respective support legs 120, 122, 170, 172, 180, 182, 190, 192 and sits either directly on or minimally spaced above fluid table 130, 132. In the second orientation, grow tray assembly 110 is supported by the upper surface of respective support legs 120, 122, 170, 172, 180, 182, 190, 192 and sits a predetermined distance "d" above fluid table 130, 132. Accordingly, plants can be grown in both an initial germination phase, corresponding to grow tray assembly 110 being positioned in the first orientation, and a subsequent growth phase, corresponding to grow tray assembly 110 being positioned in the second orientation, eliminating the need for a separate germinating table and any transplantation of individual or batches of plants between germinating and subsequent growth phases.

Moreover, grow tray assembly 110 allows fast, even application of seeds on the porous medium 230 due at least in party to the plurality of apertures 212 having tessellated edges. This arrangement further allows sufficient access to sunlight and nutrient fluid to seeds disposed on porous medium 230 and within the plurality of apertures 212, while ensuring proper seed spacing in that no seeds will be positioned in the gaps between apertures 212. In addition, the 3-layered nature of grow tray assembly 110 limits entry of light into a root zone below grow tray assembly 110, which provide further insulating properties.

**FIG. 3A** illustrates a perspective view of a plurality of grow tray assemblies 110, as shown in **FIG. 2C****,** disposed in a first orientation within hydroponic system 100 according to example embodiments. **FIG. 3B** illustrates an elevation view of hydroponic system 100 as shown in **FIG. 3A****.** Although **FIGs. 3A** and **3B** illustrate hydroponic system 100 of **FIG. 1A****,** the corresponding description is equally applicable to any hydroponic system described herein, e.g., hydroponic systems 102, 104, 106.

As illustrated in **FIGs. 3A** and **3B****,** in the first orientation, grow tray assemblies 110 are positioned on or minimally spaced above fluid table 130 allowing seeds or newly sprouted seeds having relatively short roots direct exposure to the nutrient fluid, e.g., mineralised water, flowing over fluid table 130. **FIG. 3A** further illustrates a groove or ridge 126 on an inside surface of support legs 120, 122, which in some embodiments, support fluid table 130. In embodiments without groove or ridge 126, fluid table 130 can be directly supported by the inside surface of support legs 120, 122 due to their tapering orientations.

**FIG. 3C** illustrates a perspective view of a plurality of grow tray assemblies 110, as shown in **FIG. 2C****,** disposed in a second orientation within hydroponic system 100 according to example embodiments. **FIG. 3D** illustrates an elevation view of hydroponic system 100 as shown in **FIG. 3C****.** Although **FIGs. 3C** and **3D** illustrate hydroponic system 100 of **FIG. 1A****,** the corresponding description is equally applicable to any hydroponic system described herein, e.g., hydroponic systems 102, 104, 106.

As illustrated in **FIGs. 3C** and **3D****,** in the second orientation, which is turned substantially 90° from the first orientation, grow tray assemblies 110 are positioned a predetermined distance "d" above fluid table 130 allowing seedlings, now having roots longer than in the previous germinating phase, proper exposure to the nutrient fluid, e.g., mineralised water, flowing over fluid table 130. The predetermined distance "d" can vary depending on the type of plant being grown. In this second orientation, grow tray assemblies 110 can be positioned on, and supported by, a top surface of support legs 120, 122, as previously shown in **FIG. 1A****.**

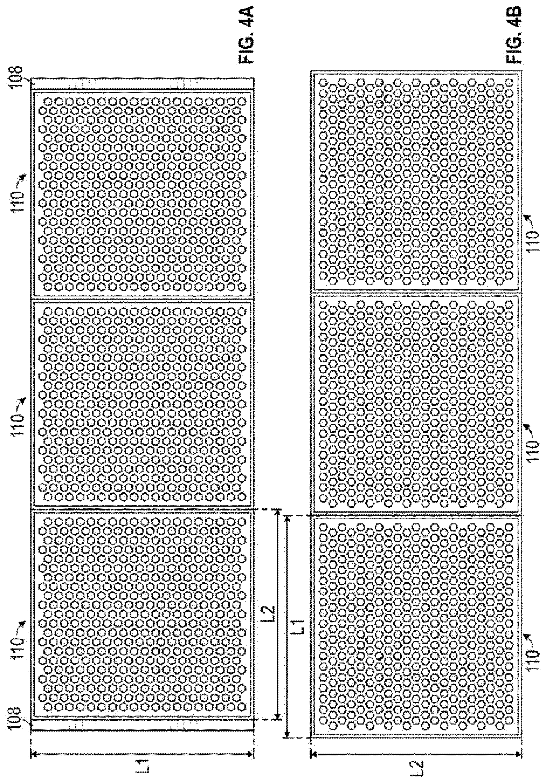

**FIG. 4A** illustrates a plan view of the plurality of grow tray assemblies 110, as shown in **FIG. 2C****,** disposed in the first orientation. **FIG. 4B** illustrates a plan view of the plurality of grow tray assemblies 100, as shown in **FIG. 2C****,** disposed in the second orientation.
As shown in **FIG. 4A****,** since grow tray assemblies 110 are disposed in the first orientation, with second length L2 extending parallel to a direction of nutrient fluid flow along fluid table 130, the plurality of grow tray assemblies 110 can fit against guide 108 on at least one side.

As shown in **FIG. 4B****,** since grow tray assemblies 110 are disposed in the second orientation, with first length L1, which is greater than second length L2, extending parallel to the direction of nutrient fluid flow along fluid table 130, the plurality of grow tray assemblies 110 can extend a greater total length along the length of extension of hydroponic system 100 compared to when in the first orientation. Accordingly, in some embodiments, guide(s) 108 can be removed when grow tray assemblies 110 are disposed in the second orientation. However, in some embodiments removal of guide(s) 108 may not be necessary as, in the second orientation, grow tray assemblies 110 can be disposed at a vertical position that is below guide(s) 108.

**FIGs. 5A** and **5B** further describe nutrient fluid flow in hydroponic systems 10, 100, 102, 104, 106. Although **FIGs. 5A** and **5B** illustrate hydroponic system 100 of **FIG. 1A****,** the associated description applies equally to any hydroponic system described herein, e.g., hydroponic systems 102, 104, 106.

**FIG. 5A** illustrates a cross-sectional view of a fluid flow within hydroponic system 10, 100, according to example embodiments. **FIG. 5B** illustrates a transverse cross-sectional view of hydroponic system 100 shown in **FIG. 5A** taken in the plane "6A".

Hydroponic system 100 can further include a waterproof layer 505 disposed over a top surface of fluid table 130. In some embodiments, respective ends of waterproof layer 505 can be arranged to extend down into corresponding upturned ends of fluid reservoir 140, thereby ensuring a watertight barrier for fluid table 130 and further providing a guided path for fluid to empty into one upturned end of fluid reservoir 140.

**FIGs. 5A** and **5B** illustrate a plurality of plants 510 disposed in grow tray assemblies 110 and having respective root systems 515 extending into a space between grow tray assemblies 110 and fluid table 130.

In operation, fluid pump 500 pumps nutrient fluid 520, which can comprise mineralised water for example, out a first opening in fluid reservoir 140, through fluid riser 150, onto the first side of fluid table 130. In some embodiments, the first side of fluid table 130, where fluid riser 150 expels water, can be the vertically highest point on fluid table 130.

Fluid 520 can spread across fluid table 130 through various means, for example, holes in a terminal portion of fluid riser 150, grooves formed in a proximal portion of fluid table 130, or placement of stones configured to laterally divert portions of fluid 520. As fluid 520 spreads across fluid table 130 it also flows in the direction of the arrows along fluid table 130, forming a flowing nutrient fluid layer 525 on fluid table 130. The thickness or depth of flowing nutrient fluid layer 525 can be adjusted by modulating the flow rate of fluid pump 500 and/or based on a sloping angle of fluid table 130.

At the second side of fluid table 130, opposite the first side, fluid of flowing nutrient fluid layer 525 flows off fluid table 130 and into a second opening of fluid reservoir 140 without the need for any return plumping. This second side of fluid table 130 can be the vertically lowest point on fluid table 130. Although not shown, in some embodiments, a spongy material can be disposed in the second opening of fluid reservoir 140, thereby filtering nutrient fluid 520 and reducing wear on fluid pump 500.

Due to substantially equal gravity and atmospheric pressure on the entirety of a surface of fluid 520 within fluid reservoir 140, a level of fluid 520 is substantially maintained across fluid reservoir 140. Accordingly, as fluid 520 falls back into fluid reservoir 140, fluid 520 is naturally forced through fluid reservoir 140 in the direction of the arrows, setting up a natural convection current, which ensures continual circulation of fluid 520 and also reduces algae growth.

Fluid reservoir 140, as utilised by the hydroponic systems described herein, will now be described in more detail in connection with **FIGs. 6A-6C****.**

**FIG. 6A** illustrates a cross-sectional view of fluid reservoir 140 having ends disposed in a substantially vertical orientation, according to example embodiments. **FIG. 6B** illustrates another cross-sectional view of fluid reservoir 140 taken in plane "6B" of **FIG. 6A****.** Fluid reservoir 140 can comprise a waterproof liner 602, which can be filled with nutrient fluid. Utilising waterproof liner 602 provides simple system cleaning, since waterproof liner 602 can be replaced in less than 5 minutes, further encouraging regular system maintenance. In some embodiments, waterproof liner 602 can comprise plastic or any other suitable waterproof material.

Fluid reservoir 140 can further comprise an insulating layer 604 disposed around an outside of fluid reservoir 140. In some embodiments, insulating layer 604 can be black in colour and/or can be opaque to visible light and/or any wavelength of electromagnetic radiation that can stimulate algae or other plant growth within fluid reservoir 140, thereby substantially reducing or eliminating such growth. In some embodiments, insulating layer 604 can further have heat insulating properties such that the fluid in fluid reservoir 140 is held within a desired temperature range despite the outside environment being outside that range. Accordingly, insulating layer 604 can comprise a fabric such as neoprene, an open or closed-cell foam, such as expanded polyethylene (EPE) foam with or without double-sided aluminum XPE foil, and/or any other suitable material having sufficient light-blocking and/or thermal insulating properties. In some embodiments, insulating layer 604 can be selected from a plurality of insulating layers each having a different thickness and/or thermal insulating properties according to the requirements of the particular plants to be grown and/or the particular environmental conditions.

Fluid reservoir 140 can further comprise a reservoir jacket 606 comprising a fabric or cloth material and configured to enclose insulating layer 604 and waterproof liner 602, as will be described in more detail in connection with **FIG. 6C** below.

**FIG. 6C** illustrates a perspective view of a portion of fluid reservoir 140 of **FIGs. 6A** and **6B****.** **FIG. 6C** illustrates reservoir jacket 606, of fluid reservoir 140, having fastener 142, which can be a hook-and loop type fastener such as Velcro^{®}, or any other suitable type of fastener. In some embodiments, one or more hook or loop type patches or strips can be adhered and/or secured to portions of reservoir jacket 606 such that when an opening at the end of fluid reservoir 140 is turned up, as previously described, a complementary loop or hook type patch aligns with the one or more hook or loop type patches, thereby maintaining the opening at the end of fluid reservoir 140 in the upturned orientation.

For example, a first patch 142a can be secured to an upper portion of one side of crease 144 in reservoir jacket 606 and a second patch 142b, complementary to first patch 142a, can be secured to an upper portion of a second side of crease 144 such that, when the opening at the end of fluid reservoir 140 is in the upturned orientation, first patch 142a and second patch 142b are substantially aligned and secured to one another. A third patch 142c can be secured to a portion of reservoir jacket 606 medial to crease 144 and a fourth patch 142d. complementary to third patch 142c, can be secured to a portion of reservoir jacket 606 lateral to crease 144 and extend across crease 144 such that, when the opening at the end of fluid reservoir 140 is in the upturned orientation, third patch 142c and fourth patch 142d are substantially aligned and secured to one another. However, any other method of securing the ends of fluid reservoir 140 in the above-described upturned position is also contemplated.

The hydroponic systems 10, 100, 102, 104, 106, 200, 300, 400 described in this disclosure offer many advantages over systems currently available. For example, hydroponic systems 10, 100, 102, 104, 106, 200, 300, 400 have far fewer parts, not requiring any plumbing other than fluid riser 150. Accordingly, hydroponic systems 10, 100, 102, 104, 106, 200, 300, 400 are simpler to set up and easier to maintain. This ease of maintenance, as well as utilisation of light-blocking materials in the construction of one or both of insulating layer 604 and fluid reservoir 140 prevents algae growth.

In addition, since fluid reservoir 140 is flexible and collapsible, it can be folded flat and/or rolled up into a very compact space for storage and/or shipping. The use of such a flexible and collapsible fluid reservoir 140, especially as placed directly underneath fluid table 130, 132 eliminates a need for separately spaced, rigid, bulky fluid reservoirs and growing tables.

Hydroponic systems 10, 100, 102, 104, 106, 200, 300, 400 are also modular and scalable such that multiple hydroponic systems 10, 100, 102, 104, 106, 200, 300, 400 can be arranged in series. For example, multiple hydroponic systems 10, 100, 102, 104, 106, 200, 300, 400 can have adjacent fluid tables 130, 132 and adjacent fluid reservoirs 140 aligned at their meeting edges. A waterproof liner, similar to waterproof liner 602, but having a length extending along an entirety of the multiple hydroponic systems 10, 100, 102, 104, 106, 200, 300, 400 can be disposed within series-coupled reservoir jackets 606 and an opening at one end of fluid reservoir 140 of a first hydroponic system 10, 100, 102, 104, 106, 200, 300, 400 and an opening at an opposite end of a fluid reservoir 140 of a last hydroponic system 10, 100, 102, 104, 106, 200, 300, 400 in the series can be disposed in the previously-described upturned orientation. Similarly, a waterproof layer, such as waterproof layer 505, but having a length extending along an entirety of the multiple hydroponic systems 10, 100, 102, 104, 106, 200, 300, 400 can be disposed over a top surface of each fluid table 130, 132 with respective ends arranged to extend down into corresponding upturned ends of the series-combined fluid reservoir 140. Accordingly, a single fluid pump can be utilised to pump nutrient fluid onto a first end of the first fluid table 130, 132 forming flowing nutrient fluid layer 525 along a top surface of each fluid table 130, 132 of the multiple hydroponic systems 10, 100, 102, 104, 106, 200, 300, 400 which ultimately falls into the upturned opening at the opposite end of combined fluid reservoirs 140, recycling the nutrient fluid. Such a modular, compact design minimises the energy required to pump the water up to fluid table 130, 132, hence requiring only a small, energy efficient pump, and making hydroponic systems 10, 100, 102, 104, 106, 200, 300, 400 highly energy efficient.

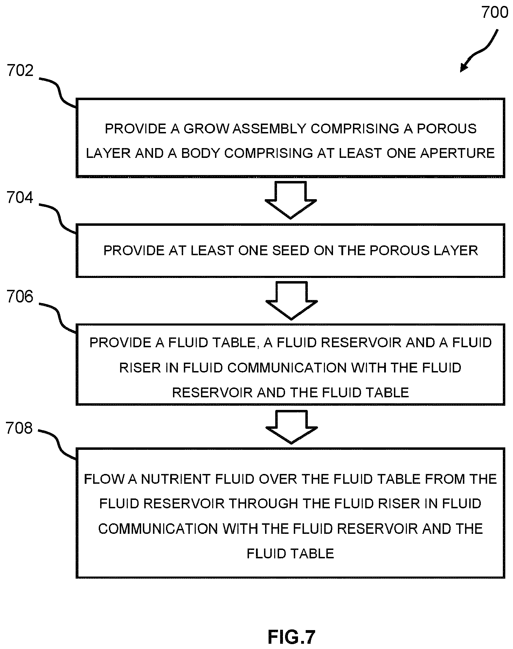

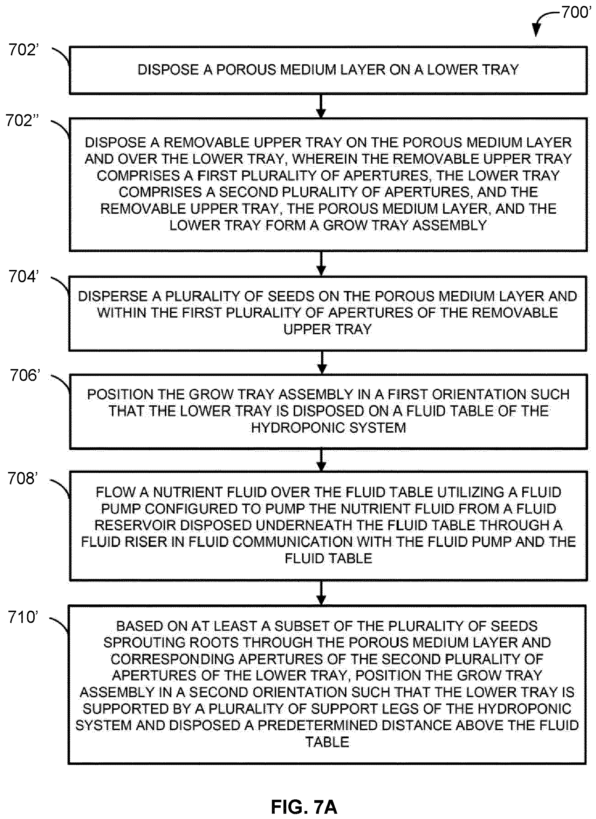

An example method for utilising a hydroponic system, such as the hydroponic systems 10, 102, 104, 106, 200, 300, 400 as previously discussed, will now be described in connection with **FIG.** 7. Flowchart 700, as well as any associated method, can correspond to any description relating to any portion of hydroponic systems 10, 100, 102, 104, 106, 200, 300, 400. In some embodiments, a method can comprise one or more additional steps, can omit one or more described steps, and/or can include performing one or more steps in a different order than described herein.

At block 702, a grow assembly is provided comprising a porous layer and a body comprising at least one aperture.

At block 704, at least one seed is provided on the porous layer.

At block 706, a fluid table, a fluid reservoir, and a fluid riser in communication with fluid reservoir and the fluid table, are provided. The providing a fluid table may comprise disposing the fluid table underneath the porous layer. The providing a reservoir may comprise disposing the fluid reservoir underneath the fluid table. The providing a grow assembly may comprise disposing the grow assembly on the fluid table of the hydroponic system.

At block 708, a nutrient fluid is flowed over the fluid table from the fluid reservoir through the fluid riser in fluid communication with the fluid reservoir and the fluid table.

At block 710 (not shown), the grow assembly is optionally supported by a support of the hydroponic system.

A further example method for utilising any of hydroponic systems 10, 100, 102, 104, 106 will now be described in connection with **FIG. 7A****.** Flowchart 700', as well as any associated method, can correspond to any description relating to any portion of hydroponic systems 10, 100, 102, 104, 106. In some embodiments, a method can comprise one or more additional steps, can omit one or more described steps, and/or can include performing one or more steps in a different order than described herein.

The body may be in the form of a tray assembly, so that the combination of the body and the porous layer form a grow tray assembly. Therefore, at block 702', a porous layer is disposed on a lower tray of the grow tray assembly. For example, as previously described in connection with at least **FIGs. 2A-2C****,** porous layer 230 is disposed on lower tray 220. Block 702' may be a sub-block of block 702 of **FIG. 7****.**

At block 702", a removable upper tray of the grow tray assembly is disposed on the porous layer and over the lower tray. For example, as previously described in connection with at least **FIGs. 2A-2C****,** removable upper tray 210 is disposed on porous layer 230 and over lower tray 220. Removable upper tray 210 comprises a first plurality of apertures 212. Lower tray 220 comprises a second plurality of apertures 222. Removable upper tray 210, porous layer 230, and lower tray 220 form grow tray assembly 110, as previously described in connection with at least **FIGs. 1A-****2C.** Block 702" may also be a sub-block of block 702 of **FIG. 7****.**

At block 704', a plurality of seeds are dispersed on the porous layer and within the first plurality of apertures of the removable upper tray. For example, a plurality of seeds can be sprinkled uniformly across the top face of grow tray assembly 110 when assembled. The sloping, tessellated edges of the first plurality of apertures 212 allow the user to, for example, pass his or her hand across removable upper tray 210 after sprinkling the seeds causing the seeds to naturally fall to porous layer 230 exposed within the first plurality of apertures 212. Such an arrangement allows the seeds to be rapidly and evenly distributed across removable upper tray 210. Block 704' may be a sub-block of block 704 of **FIG. 7****.**

At block 706', the grow tray assembly is positioned in a first orientation such that the lower tray is disposed on a fluid table of the hydroponic system. For example, as previously described in connection with at least **FIGs. 1**, 1A-1D and **3A-4B,** grow tray assembly 110, and thus at least lower tray 220, have a first length in a first dimension and a second length, shorter than the first length, in a second dimension substantially perpendicular to the first dimension. In a first orientation, where the second length extends substantially perpendicular to the direction of nutrient fluid flow across fluid table 130, 132, grow tray assembly 110 can be disposed on fluid table 130, 132. Accordingly, in some embodiments, the second length L2 of grow tray assembly 110 can be substantially equal to or less than the width of fluid table 130, 132, thereby allowing grow tray assembly 110 to fit between the inside surfaces of support legs 120, 122, 170, 172, 180, 182, 190, 192. This can correspond to a germination phase. Block 706' may be a sub-block of block 706 of **FIG. 7****.**

At block 708', a nutrient fluid is flowed over the fluid table utilising a fluid pump configured to pump the nutrient fluid from a fluid reservoir disposed underneath the fluid table through a fluid riser in fluid communication with an optional fluid pump and the fluid table. For example, as previously described in connection with at least **FIGs. 1**, 1A-1D, 3A-3D, and 5A-5B, fluid pump 500 pumps nutrient fluid 520 from fluid reservoir 140, disposed underneath fluid table 130, 132, through fluid riser 150, onto a first side of fluid table 130, 132. As nutrient fluid 520 spreads out across fluid table 130, 132 it forms flowing nutrient fluid layer 525, the height or depth of which can be controlled by either or both of the angle of fluid table 130, 132 and the flow rate of fluid pump 500. Nutrient fluid 520 then flows off a second side of fluid table 130, 132 opposite the first side back into fluid reservoir 140, where it is recycled. Block 708' may be a sub-block of block 708 of **FIG. 7****.**

At block 710', based on at least a subset of the plurality of seeds sprouting roots through the porous layer and corresponding apertures of the second plurality of apertures of the lower tray, the grow tray assembly is positioned in a second orientation such that the lower tray is supported by a plurality of support legs of the hydroponic system and disposed a predetermined distance above the fluid table. For example, as previously described in connection with **FIGs. 3C-****5B,** once the seeds have germinated and their water shoots, e.g., roots, have penetrated porous layer 230, grow tray assembly 110 can be rotated 90 degrees, such that lower tray 220 is supported by a support, such as support legs 120, 122, 170, 172, 180, 182, 190, 192, in some embodiments by an upper edge or surface of the support legs. In the second orientation, the first length, which is longer than the second length, of grow tray assembly 110 is positioned perpendicular to the flow of nutrient fluid across fluid table 130. In this second orientation, grow tray assembly 110 sits higher up in the hydroponic system, thereby allowing the roots 515 the space they need to grow and mature as the plants grow. Block 710' may be a sub-block of block 710 (not shown in **FIG. 7****).**

As previously described, fluid reservoir 140 can be flexible, and collapsible when not filled with nutrient fluid 520. In some embodiments, a method for utilising any of hydroponic systems 10, 100, 102, 104, 106, 200, 300, 400 can further comprise filling fluid reservoir 140 with a nutrient fluid thereby expanding fluid reservoir 140.

As previously described, fluid reservoir 140 can comprise reservoir jacket 606 comprising at least one fastener 142. In some embodiments, a method for utilising any of hydroponic systems 10, 100, 102, 104, 106 can further comprise securing a respective opening at each end of fluid reservoir 140 in an upturned orientation utilising the at least one fastener 142.

As previously described, hydroponic systems 10, 100, 102, 104, 106, 200, 300, 400 can further comprise reservoir 140 can comprise waterproof layer 505 on fluid table 130, 132. In some embodiments, a method for utilising any of hydroponic systems 10, 100, 102, 104, 106, 200, 300, 400 can further comprise disposing waterproof layer 505 on fluid table 130, 132 and disposing each respective end of waterproof layer 505 in the respective opening at each end of fluid reservoir 140.

As previously described, a depth of a layer 525 of nutrient fluid 520 on fluid table 130,132 can be controlled by adjusting one or both of an angle of fluid table 130,132 and a flow rate of fluid pump 500.

As previously described, the plurality of support legs 120, 122, 170, 172, 180, 182, 190, 192 can be configured to fold substantially flat beneath grow tray assembly 110 when storing or transporting hydroponic systems 10, 100, 102, 104, 106. Accordingly, some embodiments of a method for utilising any of hydroponic systems 100, 102, 104, 106 can further comprise folding the plurality of support legs 120, 122, 170, 172, 180, 182, 190, 192 substantially flat beneath grow tray assembly 110 when storing or transporting hydroponic systems 10, 100, 102, 104, 106.

As previously described, insulating layer 604 can be selected from a plurality of insulating layers each having a different thickness and/or thermal insulating properties according to the requirements of the particular plants to be grown and/or the particular environmental conditions. Accordingly, some embodiments of a method for utilising any of hydroponic systems 10, 100, 102, 104, 106, 200, 300, 400 can further comprise selecting insulating layer 604 of fluid reservoir 140 based at least in part on conditions of an external environment, insulating layer 604 being substantially opaque to visible light.

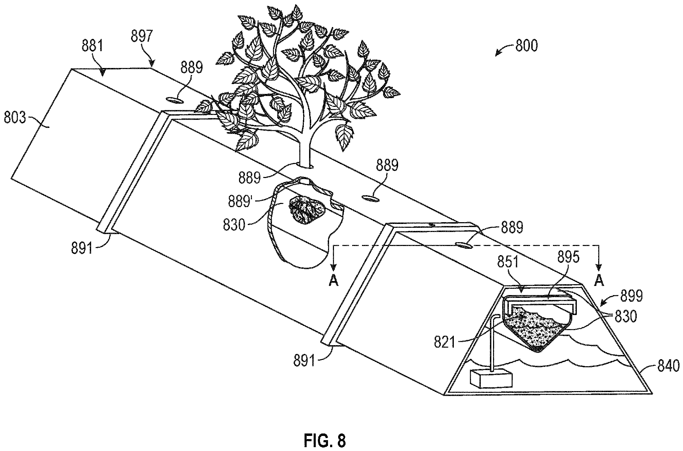

**FIG. 8** shows one example of a hydroponic system 800 having a first end 899 and a second end 897. Although the first end 899 of the system 800 is shown as an open end in **FIG. 8****,** it is contemplated that the first end 899 and second end 897 may comprise closed ends. The FIG. 8 system comprises a reservoir 840 which may comprise a flexible reservoir such as, but not limited to, a reservoir 840 comprised of a flexible polymeric material. Other materials known in the art are also contemplated. In addition to the reservoir 840, the system 800 also comprises a flexible fluid table 830 and a support system.

As shown in **FIG. 8****,** the reservoir 840 may further comprise a first plurality of apertures 889. Although the apertures 889 are located on a top surface 881 of the reservoir 840, it is contemplated that similar apertures 889 may be located in other reservoir surfaces such as, but not limited to a side surface 803. The first plurality of apertures 889 may vertically align with a second plurality of apertures 889' in the flexible fluid table 830. The second plurality of apertures 889' may also be located in a top surface 851 of the flexible fluid table.

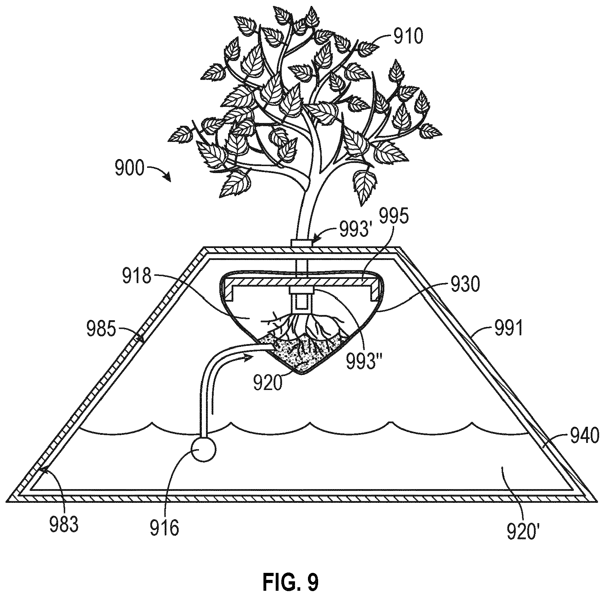

The support system may be comprised of a flexible fluid table support 895 and a coupling system having one or more first portions 891, 991 which surround at least a portion of the reservoir 895, as seen in **FIG. 8****,** and one or more second portions 993', 993", as seen in **FIG. 9****.** The one or more second portions 993', 993" may comprise a bolt/nut fastener or any other coupling mechanism or fastening system known in the art and which may be used the couple the flexible fluid table support 995 to the flexible fluid table 930 and the first portion 991.

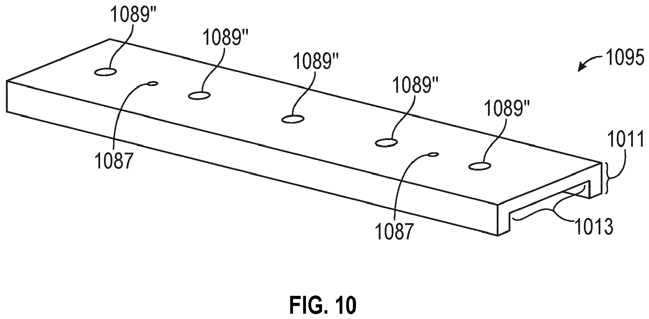

**FIG. 10** shows one example of a flexible fluid table support 1095 that may be used in association with the system of **FIG. 8****,** showing a third plurality of apertures 1089" that may vertically align with the first plurality of apertures 889 in the reservoir 840 and the second plurality of apertures 889' in the flexible fluid table 830, as seen in **FIG. 8****.** **FIG. 10** also shows one or more bore holes 1087 which may be threaded and/or otherwise adapted to receive at least part of the second portion 993', 993" of the coupling system. Though the coupling system, the second portions 993' 993", may help to ensure accurate and stable alignment of the apertures 889, 889', 1089". Furthermore, and as seen in **FIG. 9****,** the coupling system may couple the flexible fluid table 930 to the flexible fluid table support 995. The downward force provided by the weight from the fluid 920 in the flexible fluid table 930 may also help to couple the flexible fluid table 930 to the flexible fluid table support 995 and prevent misalignment of the apertures 889', 889', 1089". Additionally, and as seen in **FIG. 9****,** the coupling system may also couple the reservoir 940 to the flexible fluid table 930 and flexible fluid table support 995.

The flexible fluid table 930 may encompass the support 995 and receive a fluid 920. A plant 910 may grow through the apertures 889, 889', 1089", from a seed placed in the fluid 920, or a seedling having roots extending into the fluid 920, using the fluid 920 to provide at least part of the nutrients needed to grow the plant 910.

It is contemplated that the system 900 may comprise more than one flexible fluid table 930 and flexible fluid table support 995. For example, the tables 930 and supports 995 may be positioned side-by-side or vertically stacked within a reservoir 940. Other configurations are also contemplated. In any event, and although this is not shown in the figures, it is further contemplated that the reservoir 940 may contact one or more sections of the first portions 991. In such an embodiment, hat the one or more first portions may act like a brace for the reservoir 940 and the contents contained within the reservoir. In one such example, an exterior surface 985 of the reservoir 940 may contact an interior surface 983 of the first portion 991 along one or more sections, or the entirety, of the first portion 991. The system may further comprise a pump 916 for pumping fluid 920' located within the reservoir 940 to become fluid 920 located within an interior 821 of the flexible fluid table 830, as seen in **FIGs. 8** **&** **9****.**

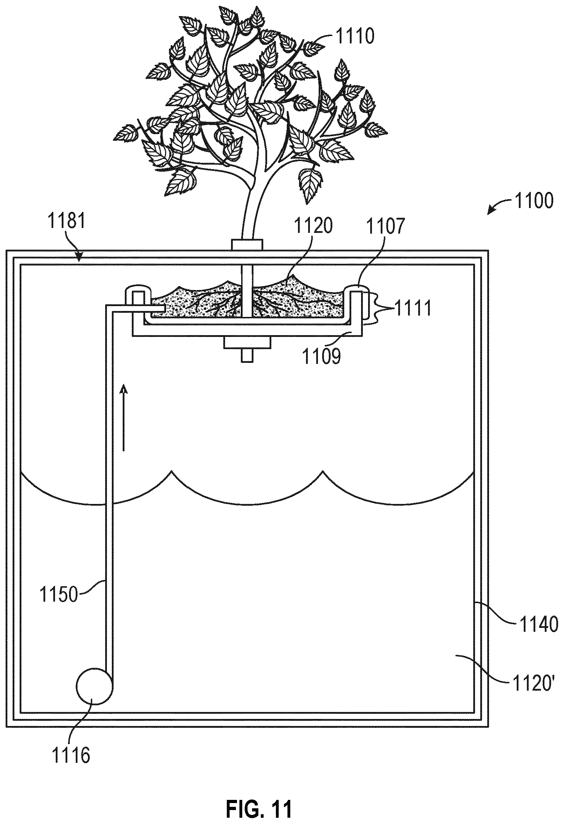

Turning now to **FIG. 11****,** seen is another example of a hydroponic system 1100 having a fluid table liner 1107 instead of the flexible fluid table 930 described in association with other embodiments. The **FIG. 11** embodiment also comprises a fluid table liner support 1109. One fluid table liner support 1109 may comprise the flexible fluid table support 1095 of **FIG. 10** without the third plurality of apertures 1089". Additionally, in the **FIG. 11** embodiment, the vertical extensions 1011 seen in FIG. 10 extend from a horizontal platform 1013 towards the top surface 1181 of the reservoir 1140 instead away from the top surface 881 when used in association with the flexible fluid table 830, as seen in **FIG. 8****.** The liner 1107 may rest or be coupled to the horizontal platform 1013 and extend upwards and over the vertical extensions 1111, curving at least partially down an outer surface of the extensions 1111, as seen in **FIG. 11****.** Coupling may occur through the use of an adhesive or through any other manner known in the art. It is also contemplated that friction between the horizontal platform 1013 and the liner 1107, as seen in **FIGs. 10** **and** **11****,** may enable the liner 1107 to rest on the platform 1013. Weight from the fluid 1120 may help create such friction and/or may otherwise enable the liner 1013 to rest on the platform 1013. Similar to the embodiment seen in **FIGs. 8** **&** **9****,** plants 1110 may grow from a seed or a seedling placed on the fluid table liner 1107 and which extends up through an aperture 889 (as seen in **FIG. 8****)** located in the reservoir 1140. Fluid 1120' in the reservoir 1140 may travel through the riser 1150, through the use of a pump 1116, to rest as fluid 1120 on the fluid table liner 1107.

## Claims

1. A hydroponic system, comprising:
a reservoir comprising a first plurality of apertures;
a flexible fluid table substantially encapsulated by the reservoir; and
a support system , wherein the support system comprises:
at least one flexible fluid table support, and
a coupling system wherein
a first portion of the coupling system surrounds at least a portion of the reservoir, and
a second portion of the coupling system at least one of directly and indirectly couples the at least one flexible fluid table support to the flexible fluid table.

2. The hydroponic system of claim 1, wherein the at least one flexible fluid table further comprises a second plurality of apertures substantially vertically aligned with the first plurality of apertures.

3. The hydroponic system of either of claims 1 and 2, wherein the coupling system comprises a plurality of fasteners, each of the plurality of fasteners further coupling the reservoir and the flexible fluid table to the elongated member.

4. The hydroponic system of any one of claims 1 to 3, wherein:
the reservoir is coupled to the flexible fluid table; and
the reservoir and flexible fluid table are coupled to the at least one flexible fluid table support.

5. The hydroponic system of claim 4, wherein at least one of the first portion and second portion of the coupling system couples the reservoir, flexible fluid table, and flexible fluid table support.

6. The hydroponic system of claim 2, wherein the flexible fluid table support further comprises a third plurality of apertures substantially vertically aligned with the second plurality of apertures.

7. The system of any preceding claim further comprising a pump and wherein,
the flexible fluid table comprises an interior,
the pump provides the interior a fluid, and
the interior stores the fluid.

8. The hydroponic system of any preceding claim, wherein the flexible fluid table comprises a fluid table liner and wherein:
the flexible fluid table support comprises a fluid table liner support having a horizontal platform; and
the fluid table liner rests on the horizontal platform.

9. The hydroponic system of claim 8, wherein the flexible fluid table liner is at least one of coupled to and friction fit to the horizontal platform.

10. The hydroponic system of any preceding claim, further comprising a fluid pump and a fluid riser, wherein the fluid riser is encapsulated by the reservoir and is in fluid communication with the flexible fluid table liner and the fluid pump in such a way that the fluid pump transfers a fluid from the reservoir, through the fluid riser, and onto the flexible fluid table liner.

11. A grow assembly comprising:
a reservoir comprising a plurality of surfaces, wherein:
a first of the plurality of surfaces comprises a first plurality of apertures, and
a flexible fluid table encapsulated by the reservoir, wherein the flexible fluid table comprises a top surface comprising a second plurality of apertures vertically aligned with the first plurality of apertures of the reservoir; and
a support system comprising:
at least one flexible fluid table support comprising an elongated member comprising a third plurality of apertures substantially aligned with the second plurality of apertures of the flexible fluid table, and
a coupling system coupling the reservoir, the flexible fluid table, and the at least one flexible fluid table support.

12. The grow assembly of claim 11, wherein the coupling system comprising a plurality of first portions encapsulating at least a portion of the reservoir, and the reservoir comprises an exterior surface, wherein the plurality of first portions supports a portion of the exterior surface.

13. The grow assembly of either of claims 11 and 12, wherein the first portion comprises a support frame encapsulating at least a portion of the reservoir.

14. The grow assembly of any one of claims 11 to 13, further comprising:
a fluid pump; and
a fluid riser;
wherein the fluid riser is encapsulated by the reservoir and is in fluid communication with the flexible fluid table and the fluid pump in such a way that the fluid pump transfers a fluid from the reservoir, through the fluid riser, and into the flexible fluid table, optionally in which
the reservoir comprises a plurality of surfaces; a first of the plurality of surfaces comprises the first plurality of apertures; and
at least two other of the plurality of surfaces comprise inner surfaces.

15. A method for growing plants, comprising:
positioning at least one of a seed and a plant in at least one of a flexible fluid table and a fluid table liner, the flexible fluid table comprising a first plurality of apertures;
supplying a predetermined quantity of fluid to a reservoir, wherein,
the reservoir substantially encapsulates the flexible fluid table within the reservoir, and
the reservoir comprises a second plurality of apertures substantially aligned with the first plurality of apertures; and
engaging a fluid riser, via a fluid pump, to transfer the fluid from the reservoir to the at least one a flexible fluid table and a fluid table liner.
